# EUROPEAN PATENT SPECIFICATION

(11) **EP 1 111 999 B1**
(45) Date of publication and mention of the grant of the patent: **22.01.2003**
(21) Application number: 99940417.1
(22) Date of filing: 09.09.1999
(51) Int. Cl.: A23C 9/15, A01J 11/10, B01F 15/04, B65B 37/00

(54) **METHOD AND APPARATUS FOR PRODUCING A DAIRY PRODUCT**
VERFAHREN UND VORRICHTUNG ZUR HERSTELLUNG EINES MOLKEREIPRODUKTES
PROCEDE ET APPAREIL DE FABRICATION D'UN PRODUIT LAITIER

(30) Priority: 09.09.1998 GB 9819525
(43) Date of publication of application: 04.07.2001
(73) Proprietor: ELOPAK SYSTEMS AG, 8152 Glattbrugg (CH)
(72) Inventor: EIE, Thomas, N-1387 Asker (NO); GLENNE, Odd, Herman, N-3058 Solbergmoen (NO)
(74) Representative: Burrows, Anthony Gregory
(86) International application number: IB9901525
(87) International publication number: WO00013518

(56) References cited:
- WO-A-94/04257
- WO-A-97/45664
- GB-A- 2 194 218
- US-A- 2 859 759
- US-A- 3 776 252
- US-A- 3 946 113
- US-A- 3 960 295
- US-A- 4 091 834
- US-A- 4 583 453

## Description

This invention relates to a method and apparatus for producing a dairy product, for example milk with a predetermined fat content.

A flow proportioning and control system is disclosed in US-A-2859759 in which detergent and water are mixed, and the mixture supplied to a closed tank and there foamed to provide a detergent-water (or detergent-steam) mixture for quick-wash of a motor car on a conveyor line. A water delivery line contains a normally closed solenoid valve controlled by the mixture level in the closed tank. A detergent delivery line, extending from a tank containing detergent, contains an electrically driven pump controlled by a flow meter in the water delivery line. The water and the detergent mix in a T-piece and the mixture then flows to the closed tank from the top of which the foamed mixture passes through a mixture delivery line to the car wash.

US-A-3776252 discloses a system for mixing, on demand, two or more liquids at a constant ratio with one of the liquids serving to pump one or more of the other liquids into the system. The piston of one cylinder is drivingly connected to the piston of another cylinder, the first cylinder being connected to a source of pressurized liquid, such as water, which serves as a driving force for the piston of the second cylinder which is connected to the source of liquid, such as a detergent, whereby a constant ratio of liquids is maintained. Conduits are provided to mix the discharges of the two cylinders prior to delivery to an end-use chamber such as a washing tank for a running textile web. A control system is provided for actuating the pumping system to maintain a constant level of mixed liquids in the chamber.

WO94/04257 discloses apparatus for delivering a metered quantity of additive liquid, such as insecticide, from a container to a carrier liquid such as water supplied by a pipe. The apparatus comprises a fluid motor driven by the flow of carrier liquid and a peristaltic pump driven by the fluid motor for delivering the additive to a mixing chamber downstream of the fluid motor proportionally to the flow of the carrier liquid. From the mixing chamber the mixture is delivered to an end-use container, such as a sheep dip.

In US-A-3960295, a liquid proportioning system includes two groups of positive metering tanks, each group consisting of at least two tanks each containing a supply of liquid to be blended and including an outlet control device for selectively regulating the volume of liquid leaving the tank per unit of time. The liquids from each tank are fed together through a single conduit to a mixer which continuously blends the liquid components as they are flowing, and the blended liquids are fed to a reservoir tank, from which they are fed to a point of use in accordance with the variable requirements of the latter, which may be bottling equipment or other filling equipment the liquid volume requirements of which may vary from time to time. One group of positive metering tanks feeds the liquid components to the mixer in exact proportions until these tanks are depleted, at which time the flow from these tanks is shut off automatically and the second group of tanks begins to feed the proportioned liquid components to the mixer, while the first group of tanks is refilled. When the requirements of the point of use are decreased, sensors slow down the feeding of the liquid to the reservoir tank by increasing the time interval between the emptying of one group of metering tanks and the commencement of feeding from the other group of tanks.

US-A-4091834 discloses an apparatus for automatically preparing a solution of controlled salt concentration, which comprises a mixer container in which preparation of the solution may take place, a regulator device for regulating supply of components of the solution to the mixer container, a level detector for detecting the level of solution in the mixer container in the vicinity of a prescribed primary level, a concentration probe for detecting concentration of salts in the solution, and a control device connected to receive electronic signals transmitted from the level detector and the concentration probe for producing a control output signal to control the regulator device, whereby the level of solution in the container is maintained in the vicinity of the prescribed primary level and the concentration of salts in the solution is maintained in the region of a predetermined value. The regulator device includes on-off valves in respective supply ducts for the respective components.

GB-A-2194218 discloses a beverage proportioner apparatus for mixing together at least two fluids (in particular water and a pre-mixed syrup or concentrate) in controlled, preselected proportions. The apparatus comprises first and second reservoirs, fed via pneumatic control valves and maintained at constant head by sensors and controls cooperating with those valves. An orifice-defining means is located in at least one of the outlet conduits from the first and second reservoirs for, together with the levels of fluid in the associated reservoirs, controlling the rate of flow of fluid through the outlet conduits. The orifice-defining means comprises a plate having an orifice of selected size and a means for removably mounting the plate in the outlet conduit, for restricting the fluid flow to a desired flow rate, different orifice sizes achieving differing flow rates. The plate may be mounted on a rod depending from a fitting covering an aperture in the reservoir. Liquids mix in a tube downstream of the outlet conduits, and pass via a stirrer, a baffle, and an adjustable valve to a constant head reservoir for delivering the mixture in a controlled fashion to further downstream equipment. Further flow control valves may be present in the respective outlet conduits. Orifice plates may be removed to clean the apparatus.

US-A-4583453 discloses a process for the preparation and heat treatment of food products and to apparatus for performing the process. The mixing and heat treatment operations are carried out simultaneously by the injection, under pressure, of a concentrate and at least part of a constituting liquid, super-heated to a temperature above about 100°C., into a tubular chamber which is closed so as to prevent any vapourization of the constituting liquid. The apparatus for performing the process contains a tubular mixing chamber connected on the one hand to a metering pump delivering the concentrate withdrawn from at least one storage tank, and on the other hand to a generator of superheated constituting liquid. The concentrate may consist of a powder, for example milk powder, and another part of the constituting liquid, for example water. The mixture flows from the mixing chamber through a holding-hot coil for continued heat treatment of the mixture, a heat exchanger for cooling the mixture, and a buffer tank to a sterile packaging unit where the reconstituted product is packed into containers directly. The buffer tank has a level sensor which acts on the regulation of an injection pump of a water superheater according to the output of the packaging unit and it does this progressively with the possibility of stopping the two pumps, which are intercoupled by a linking device regulated so that the respective flow rates of the concentrate and the water lead to a reconstituted product containing the exact proportions desired.

US-A-3946113 discloses a continuous standardizing and blending system, in which whole milk having a known composition is introduced into a separator for separating the milk into components, e.g. a skim (fat-free) component and a high-fat component such as cream. The milk enters the separator through a conduit having a flow meter positioned therein for providing an electrical analog signal corresponding to the flow rate through the conduit. The separator has a skim outlet connected to a skim conduit and a cream outlet connected to a cream conduit. A similar flow meter in the cream conduit generates an output electrical analogue signal corresponding to the flow rate through that conduit. A programmed analogue control unit compares the signal from the milk flow meter with the signal from the cream flow meter and provides a control signal which regulates the setting of a throttling valve upstream from the cream flow meter. This setting controls the flow rate of cream through the cream conduit. By controlling the ratio between the raw or whole milk flow as it enters the separator and the cream flow as it leaves the separator, the system regulates the fat test of the cream. The skimmed milk and a controlled proportion of the cream flow can be recombined in a constant-level tank downstream to form a milk product of a desired fat content, which is then pumped from the tank through a blending portion of the system. Various additives can also be blended with the standardized milk product. It is stated that with this system one need only know the initial fat content of the raw or whole milk and on-stream fat analysis is not necessary.

In US-A-3983257, milk to be standardized is fed continuously to a centrifugal separator which discharges separate flows of skimmed milk and cream; and the density of the separated cream is maintained substantially constant by continuously measuring such density and using these density measurements to control one of the separate flows. Pipelines leading from these separate flows to a mixing zone are provided with meters for measuring the flow rates of the skimmed milk and cream, respectively; and a quotient controller operatively connected to the flow meters controls the flow through one of the pipelines to maintain the quotient of the respective flow rates substantially constant.

WO-A-94/06303 discloses a method of producing consumer milk with a defined fat content and packed in packages. In the method, two milk fractions, with respective differing fat contents, are mixed. One of the fractions has a fat content below the required fat content of the consumer milk to be produced, whilst the other has a fat content above the required fat content of the consumer milk to be produced. The mixing takes place immediately prior to, or during, the filling of the consumer milk in packages. It is stated that, advantageously, the mixing of the two fractions takes place in the package by supplying predetermined amounts of the two fractions to the package, although, if considered suitable, the mixing of the two fractions could take place immediately prior to the filling in the package in a separate mixing step in the filling machine by mixing of predetermined amounts of the two fractions corresponding to the size of the package or some multiple of the same. It is further stated that the mixing of the two fractions may also take place in a pipeline leading to the filling machine or within the same.

According to one aspect of the present invention, there is provided a method for producing a dairy product, comprising mixing first and second continuous flows of respective first and second constituents of said product in a desired ratio, temporarily storing the product in a reservoir of a filling machine, filling containers at filling means, detecting level of said product in said reservoir, and utilising the detected level to control at least one of said first and second flows, characterized in that the temporary storing of the product is in a filling reservoir of a filling machine constituting said filling means and in that the filling of the containers is from the filling reservoir.

According to a second aspect of the present invention, there is provided apparatus for producing a dairy product, comprising duct means comprised of first and second ducts extending to a mixing location for conducting first and second continuous flows of respective first and second constituents of said product to said mixing location for mixing of said first and second constituents in a desired ratio, valve means in said duct means and arranged to control flow through said duct means, filling means, a reservoir downstream of said duct means for temporarily storing said product, detecting means arranged to detect level of said product in said reservoir, and control means whereby the level detected by said detecting means is utilised to control at least one of said flows, characterized in that said filling means is a filling machine, said reservoir is a filling reservoir of said filling machine, and said control means controls at least one of said flows by controlling said valve means.

Owing to the present invention, it is possible to produce more economically a dairy product which has a virtually constant, desired ratio of constituents, because the cost of the equipment required can be minimised.

In order that the invention may be completely and clearly disclosed, reference will now be made, by way of example, to the accompanying drawings, in which:-
Figure 1 is a diagram of apparatus for producing a dairy product from two constituents,
Figure 2 is a diagram of a dairy plant including the apparatus of Figure 1, and
Figure 3 is a diagram similar to Figure 1, but of apparatus for producing a dairy product from at least four constituents.

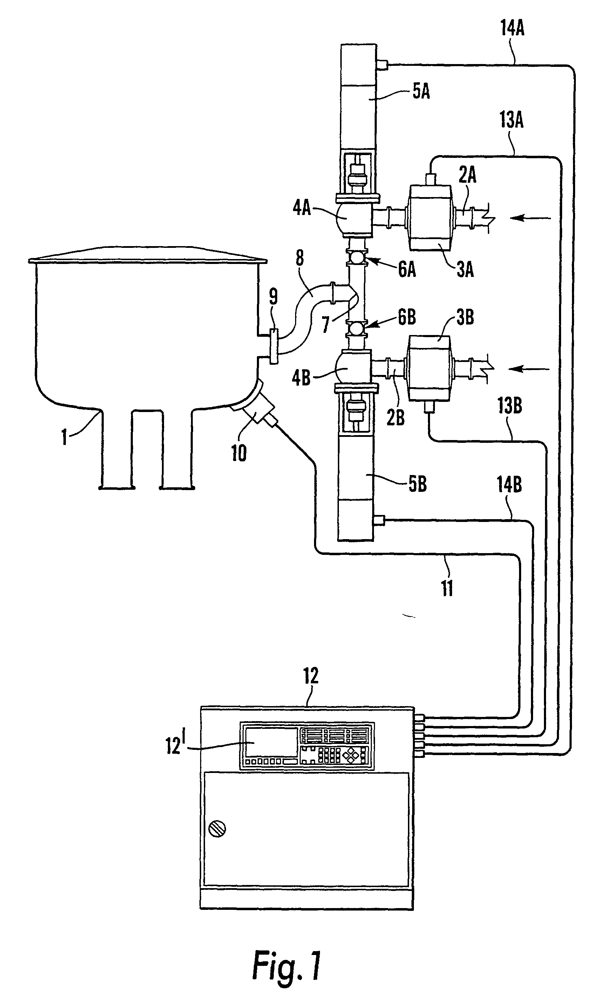

Referring to Figure 1, there is shown a reservoir in the form of a tank 1 of a filling machine, for example a form-fill-seal packaging machine; the tank 1 is a balancing tank directly connected to reciprocatory fillers of the machine. The respective constituents of the dairy product are supplied continuously to the ducts 2A and 2B. The constituents may be full fat milk and skimmed milk for constituting consumer milk. The ducts 2A and 2B contain respective flow meters 3A and 3B and, downstream thereof, respective flow regulating valves 4A and 4B (i.e. valves which are not on/off valves but valves which regulate the continuous flows) driven by respective motors 5A and 5B. Interposed in the ducts 2A and 2B downstream of the regulating valves 4A and 4B are respective non-return valves 6A and 6B. The ducts 2A and 2B join at a junction 7 where the two constituents begin to mix and the common duct 8 extends to a mixer 9 and thence to the tank 1. Preferably, the apparatus does not include any dynamic mixer, so that the mixer 9 is preferably a static mixer, which is advantageously in the form of sheet metal shaped to produce turbulence in the product passing therethrough. A level sensor 10 detects the product level in the tank 1 and feeds this information back via an electrical line 11 to a control centre 12 having a control panel 12' and containing the necessary software and hardware for automatic control of the motors 5A and 5B. Similarly, the information as to the rates of flow of the constituents through the flowmeters 3A and 3B is transmitted to the control centre 12 by respective electrical lines 13A and 13B, whilst the control centre 12 communicates with the motors 5A and 5B through electrical lines 14A and 14B, respectively.

In use of the apparatus of Figure 1, the desired product level in the tank 1, and also the volumetric ratio between the two constituents, is set at the control panel 12'. There are two control loops in the system, with a master/slave relationship between them. The master loop comprises the level sensor 10, the control centre 12 and one of regulating valves 4. The slave loop is comprised of the two flow meters 3, the control centre 12, and the other regulating valve 4. The flow through the one valve 4 primarily serves to maintain a constant level in the tank 1, whilst the other valve 4 maintains a constant ratio between the two constituents. When approach of a product change, i.e. a change to a consumer milk of a different fat content, is signalled at the control centre 12, the level sensor 10 enables the product level in the tank 1 to be lowered as much as feasible in order to minimize product loss.

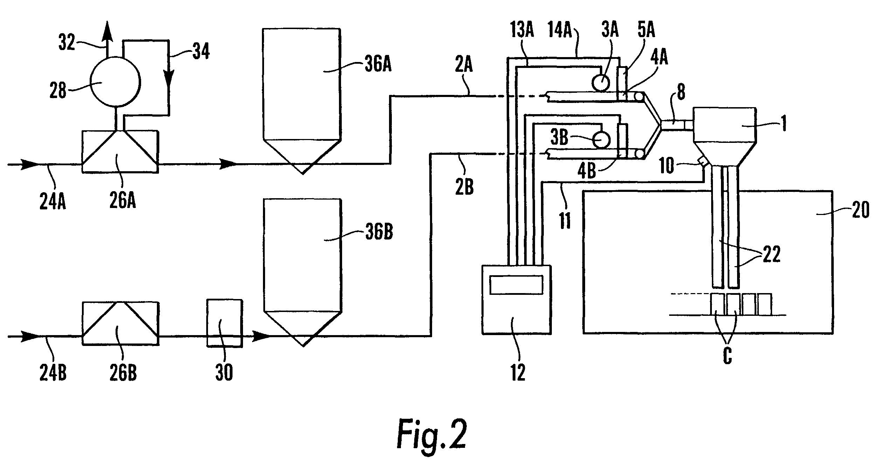

In the dairy plant according to Figure 2, the filling machine is referenced 20, its filling tank 1 being directly connected to its reciprocatory fillers 22 for filling open-topped cartons C being indexed beneath the fillers 22. Raw milk, i.e. full fat milk, is supplied at inlets 24A and 24B to respective pasteurizers 26A and 26B, whence the pasteurized raw milk passes respectively to a separator 28 and to an homogenizer 30. From the separator 28, surplus cream passes through an outlet 32 whilst the skimmed milk passes through an outlet 34 to the duct 2A and the valve 4A, or if desired to a buffer tank 36A in the duct 2A. From the homogenizer 30, the milk passes to the duct 2B and the valve 4B, or if desired to a buffer tank 36B in the duct 2B. If provided, the buffer tanks 36A and 36B enable the flows through the valves 4A and 4B and thus supply to the machine 20 to continue uninterruptedly even during maintenance or minor repair of any of the items 26, 28 and 30, and enable the items 26, 28 and 30 to continue to operate even when the machine 20 is being maintained or adjusted. In practice there will often be more than one such machine supplied from the buffer tanks 36A and 36B.

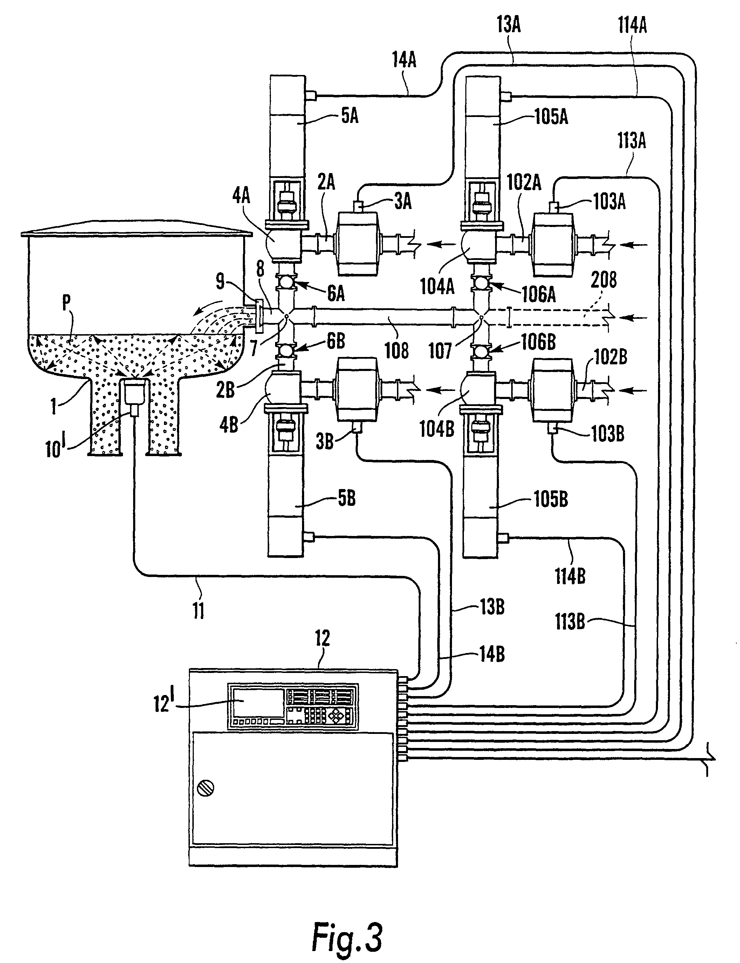

It is possible to mix more than two constituents in a predetermined volumetric relationship, whilst maintaining the mixed product level in the tank 1 substantially constant. Figure 3 illustrates apparatus in which at least four constituents are mixed. In the apparatus, the ducts 2, the flow meters 3, the regulating valves 4, the motors 5, the non-return valves 6, and the lines 13 and 14 are simply duplicated as 102A and 102B, 103A and 103B, 104A and 104B, 105A and 105B, 106A and 106B, and 113A, 113B, 114A and 114B, respectively. The ducts 102A and 102B join at a junction 107 from which leads a common duct 108 extending to the junction 7. A duct 208 is illustrated to indicate that one or more further flow meter/regulating valve and motor/non-return valve arrangements can be connected upstream of the duct 108.

In this embodiment, the master control loop again comprises the level sensor 10', the control centre 12 and one of the regulating valves 4 and 104, and there are three slave loops which each include the flow meter 3 or 103 associated with the one regulating valve and which also include the respective flow meters 3 and 103 associated with the respective other regulating valves 4 and 104. The three slave loops also each include the control centre 12 and the one regulating valve 4 or 104. The three slave loops further include the respective other three regulating valves 4 and 104. Again, the desired level of the product P in the tank 1, together with the desired volumetric ratio among the four constituents, are entered at the control panel 12'.

It will be noted that, between the mixing arrangement 7 to 9 and the filling tank 1 and thus the cartons C, there is no arrangement or device for treating the mixture. Moreover, it is advantageous to place the mixing arrangement as close as reasonably possible to the filling tank 1 which is downstream thereof. Thus, product loss on change-over from one type of consumer milk to another can be minimized. Location of the mixing arrangement upstream of the filling tank 1 has the advantage that the tank 1, even though of very small volume (roughly 45 litres) compared with the buffer tank 36A or 36B (thousands of litres), permits reliable filling of each carton C with a predetermined volume of consumer milk of predetermined fat content with a relatively simple and inexpensive operating and control system. The use of regulating valves (such as 4A and 4B) rather than metering pumps permits a relatively much larger ratio of flow rates between the component flows and a relatively faster response time (and thus more accurate filling).

The apparatus of Figure 1 or 3 is such as to be cleanable-in-place (CIP) and to be suitable for any standard of hygienic filling, including aseptic filling. Moreover, it is fully automatic, with programmable logic control (PLC).

## Claims

1. A method for producing a dairy product, comprising mixing first and second continuous flows of respective first and second constituents of said product (P) in a desired ratio, temporarily storing the product (P) in a reservoir (1) of a filling machine (20), filling containers (C) at filling means (20), detecting level of said product (P) in said reservoir (1), and utilising the detected level to control at least one of said first and second flows, **characterized in that** the temporary storing of the product (P) is in a filling reservoir (1) of a filling machine (20) constituting said filling means (20) and **in that** the filling of the containers (C) is from the filling reservoir (1).

2. A method according to claim 1, wherein there is no treatment of said mixture between said mixing and said storing.

3. A method according to claim 2, wherein there is no treatment of said mixture between said mixing and said filling.

4. A method according to any preceding claim, wherein said mixing is performed immediately before said storing.

5. A method according to any preceding claim, wherein said detected level is utilized to control the rate of one of said first and second flows, and the flow rates of the first and second flows are measured and the measurements obtained thereby are utilized to maintain a substantially constant ratio of flow rates of the respective constituents.

6. A method according to any preceding claim, wherein, as a change of product to one having a different ratio of said first and second constituents approaches, the level of the first-mentioned product (P) in said reservoir (1) is lowered to a minimum feasible level.

7. Apparatus for producing a dairy product, comprising duct means (2,8) comprised of first and second ducts (2A,2B) extending to a mixing location (7-9) for conducting first and second continuous flows of respective first and second constituents of said product (P) to said mixing location (7-9) for mixing of said first and second constituents in a desired ratio, valve means (4) in said duct means (2,8) and arranged to control flow through said duct means (2,8), filling means (20), a reservoir (1) downstream of said duct means (2,8) for temporarily storing said product (P), detecting means (10) arranged to detect level of said product (P) in said reservoir (1), and control means (12) whereby the level detected by said detecting means (10) is utilised to control at least one of said flows, **characterized in that** said filling means (20) is a filling machine (20), said reservoir (1) is a filling reservoir (1) of said filling machine (20), and said control means (12) controls at least one of said flows by controlling said valve means (4).

8. Apparatus according to claim 7, wherein there is no device for treating said mixture between said mixing location (7-9) and said filling reservoir (1).

9. Apparatus according to claim 8, wherein there is no device for treating said mixture between said mixing location (7-9) and a filling location for containers © to be filled with said mixture.

10. Apparatus according to any one of claims 7 to 9, wherein said mixing location (7-9) is disposed immediately upstream of said filling reservoir (1).

11. Apparatus according to any one of claims 7 to 10, wherein said valve means (4) comprises first and second regulating valves (4A,4B) in the respective first and second ducts (2A, 2B).

12. Apparatus according to claim 11, and including a master control loop comprised of said detecting means (10), said control means (12) and one of said valves (4A,4B); and a slave control loop comprised of first and second flow meters (3A, 3B) in the respective first and second ducts (2A, 2B), said control means (12) and the other of said valves (4A, 4B).

13. Apparatus according to any one of claims 7 to 12 and including a static mixer (9) at said mixing location (7-9).

14. In a dairy plant, apparatus according to any one of claims 7 to 13.

## Patentansprüche

1. Verfahren zum Herstellen eines Molkereiprodukts, mit dem Mischen eines ersten und eines zweiten kontinuierlichen Stroms jeweiliger erster und zweiter Bestandteile des Produkts (P) in einem gewünschten Verhältnis, dem vorübergehenden Lagern des Produkts (P) in einem Tank (1) einer Füllmaschine (20), dem Füllen von Behältern (C) an der Fülleinrichtung (20), dem Erkennen des Pegels des Produkts (P) in dem Tank (1), und dem Verwenden des erkannten Pegels, um zumindest den ersten oder den zweiten Strom zu regeln, **dadurch gekennzeichnet, daß** das vorübergehende Lagern des Produkts (P) in einem Fülltank (1) einer die Fülleinrichtung (20) bildenden Füllmaschine (20) erfolgt und daß das Füllen der Behälter (C) aus dem Fülltank (1) erfolgt.

2. Verfahren nach Anspruch 1, bei dem keine Behandlung der Mischung zwischen dem Mischen und dem Lagern erfolgt.

3. Verfahren nach Anspruch 2, bei dem keine Behandlung der Mischung zwischen dem Mischen und dem Füllen erfolgt.

4. Verfahren nach einem der vorhergehenden Ansprüche, bei dem das Mischen unmittelbar vor dem Lagern erfolgt.

5. Verfahren nach einem der vorhergehenden Ansprüche, bei dem der erkannte Pegel zum Regeln des ersten oder des zweiten Stroms verwendet wird, und die Strömungsraten des ersten und des zweiten Stroms gemessen werden und die derart erhaltenen Messwerte zum Aufrechterhalten eines im wesentlichen konstanten Verhältnisses der Strömungsraten der jeweiligen Bestandteile verwendet werden.

6. Verfahren nach einem der vorhergehenden Ansprüche, bei dem, wenn eine Veränderung des Produkts zu einem Produkt mit einem anderen Verhältnis der ersten und der zweiten Bestandteile ansteht, der Pegel des erstgenannten Produkts (P) in dem Tank (1) auf einen minimalen zulässigen Pegel gesenkt wird.

7. Vorrichtung zum Herstellen eines Molkereiprodukts, mit Leitungseinrichtungen (2, 8), die aus einer ersten und einer zweiten Leitung (2A, 2B) bestehen, welche zu einer Mischstelle (7-9) verlaufen, um einen ersten und einen zweiten kontinuierlichen Strom jeweiliger erster und zweiter Bestandteile des Produkts (P) zur Mischstelle (7-9) zu leiten und die ersten und zweiten Bestandteile in einem gewünschten Verhältnis zu mischen, einer Ventileinrichtung (4) in den Leitungseinrichtungen (2, 8), die zum Regeln des Durchflusses durch die Leitungseinrichtungen (2, 8) angeordnet ist, einer Fülleinrichtung (20), einem stromabwärts der Leitungseinrichtungen (2, 8) angeordneten Tank (1) zum vorübergehenden Lagern des Produkts (P), einer Erkennungseinrichtung (10) zum Erkennen des Pegels des Produkts (P) im Tank (1) und einer Regeleinrichtung (12), welche den von der Erkennungseinrichtung (10) erkannten Pegel zum Regeln mindestens eines der Ströme verwendet, **dadurch gekennzeichnet, daß** die Fülleinrichtung (20) eine Füllmaschine (20) ist, der Tank (1) ein Fülltank (1) der Füllmaschine (20) ist und die Regeleinrichtung (12) mindestens einen der Ströme durch Steuern der Ventileinrichtung (4) regelt.

8. Vorrichtung nach Anspruch 7, bei der keine Vorrichtung zum Behandeln der Mischung zwischen der Mischstelle (7-9) und dem Fülltank (1) vorgesehen ist.

9. Vorrichtung nach Anspruch 8, bei der keine Vorrichtung zum Behandeln der Mischung zwischen der Mischstelle (7-9) und einer Füllstelle für mit der Mischung zu befüllende Behälter (C) vorgesehen ist.

10. Vorrichtung nach einem der Ansprüche 7 bis 9, bei der die Mischstelle (7-9) unmittelbar stromaufwärts des Fülltanks (1) angeordnet ist.

11. Vorrichtung nach einem der Ansprüche 7 bis 10, bei der die Ventileinrichtung (4) ein erstes und ein zweites Regulierventil (4A, 4B) in der ersten bzw. der zweiten Leitung (2A, 2B) aufweist.

12. Vorrichtung nach Anspruch 11 und mit einem Master-Regelkreis bestehend aus der Erkennungseinrichtung (10), der Regeleinrichtung (12) und einem der Ventile (4A, 4B), und mit einem Slave-Regelkreis bestehend aus einem ersten und einem zweiten Strömungsmesser (3A, 3B) in der ersten bzw. der zweiten Leitung (2A, 2B), der Regeleinrichtung (12) und dem anderen der Ventile (4A, 4B).

13. Vorrichtung nach einem der Ansprüche 7 bis 12 und mit einem Statikmischer (9) an der Mischstelle (7-9).

14. In einer Molkerei, Vorrichtung nach einem der Ansprüche 7 bis 13.

## Revendications

1. Un procédé de fabrication d'un produit laitier, comprenant les étapes consistant à : mélanger de premier et second écoulements continus de premier et second éléments respectifs constitutif dudit produit (P) dans un rapport désiré, stocker de manière temporaire le produit (P) dans un réservoir (1) d'une machine de remplissage (20), remplir des récipients (C) au niveau d'un moyen de remplissage (20), détecter le niveau dudit produit (P) dans ledit réservoir (1), et utiliser le niveau détecté pour réguler au moins un desdits premier et seconds écoulements, **caractérisé en ce que** le stockage temporaire du produit (P) est effectué dans un réservoir de remplissage (1) d'une machine de remplissage (20) constituant ledit moyen de remplissage (20) et **en ce que** le remplissage des récipients (C) est effectué à partir du réservoir de remplissage (1).

2. Un procédé selon la revendication 1, dans lequel il n'existe aucun traitement dudit mélange entre ladite étape de mélange et ladite étape de stockage.

3. Un procédé selon la revendication 2, dans lequel il n'existe aucun traitement dudit mélange entre ladite étape de mélange et ladite étape de remplissage.

4. Un procédé selon une quelconque des revendications précédentes, dans lequel ladite étape de mélange est effectuée immédiatement avant ledit stockage.

5. Un procédé selon une quelconque des revendications précédentes, dans lequel ledit niveau détecté est utilisé pour réguler le débit d'un desdits premier .et second écoulements, et dans lequel les débits d'écoulement des premier et second écoulements sont mesurés et les mesures obtenues de cette manière sont utilisées pour maintenir un rapport sensiblement constant des débits d'écoulement des éléments respectifs constitutifs.

6. Un procédé selon une quelconque revendication précédente, dans lequel, lorsqu'approche un changement de produit à un présentant un rapport qui diffère desdits premier et second éléments constitutifs, le niveau du produit premièrement mentionné (P) dans ledit réservoir (1) est abaissé à un niveau minimum faisable.

7. Appareil de fabrication d'un produit laitier, comprenant des moyens formant conduits (2,8) composés de premier et second conduits (2A, 2B) s'étendant vers un emplacement de mélange (7-9) pour conduire de premier et second écoulements continus de premier et second éléments respectifs constitutifs dudit produit (P) vers ledit emplacement de mélange (7-9) afin de mélanger, dans un rapport désiré, lesdits premier et second éléments constitutifs, des moyens formant vannes (4) dans lesdits moyens formant conduits (2,8) et disposés pour réguler l'écoulement à travers lesdits moyens formant conduits (2,8), des moyens de remplissage (20), un réservoir (1) à l'aval desdits moyens formant conduits (2,8) pour stocker de manière temporaire ledit produit (P), des moyens de détection (10) disposés pour détecter le niveau dudit produit (P) dans ledit réservoir (1) et des moyens de commande (12) par lesquels le niveau détecté par lesdits moyens de détection (10) est utilisé pour commander au moins un desdits écoulements, **caractérisé en ce que** lesdits moyens de remplissage (20) sont constitués par une machine de remplissage (20), ledit réservoir (1) est un réservoir de remplissage (1) de ladite machine de remplissage (20), et lesdits moyens de commande (12) régulent au moins un desdits écoulements en commandant lesdits moyens formant vannes (4).

8. Appareil selon la revendication 7, dans lequel il n'existe aucun dispositif pour traiter ledit mélange entre ledit emplacement de mélange (7-9) et ledit réservoir de remplissage (1).

9. Appareil selon la revendication 8, dans lequel il n'existe aucun dispositif pour traiter ledit mélange entre ledit emplacement de mélange (7-9) et un emplacement de remplissage pour des récipients (C) à remplir avec ledit mélange.

10. Appareil selon une quelconque des revendications 7 à 9, dans lequel ledit emplacement de mélange (7-9) est disposé immédiatement à l'amont dudit réservoir de remplissage (1).

11. Appareil selon une quelconque des revendications 7 à 10, dans lequel lesdits moyens formant vannes (4) comprennent de première et seconde vannes de régulation (4A, 4B) dans lesdits premier et second conduits respectifs (2A, 2B).

12. Appareil selon la revendication 11 et comprenant une boucle de commande maître composée desdits moyens de détection (10), desdits moyens de commande (12) et d'une desdites vannes (4A, 4B) ; et une boucle de commande esclave composée de premier et second mesureur d'écoulements (3A, 3B) dans les premier et second conduits respectifs (2A, 2B), desdits moyens de commande (12) et de l'autre desdites vannes (4A, 4B).

13. Appareil selon une quelconque des revendications 7 à 12 et comprenant un mélangeur statique (9) au niveau dudit emplacement de mélange (7-9).

14. Dans une laiterie, un appareil selon une quelconque des revendications 7 à 13.
